## Europäisches Patentamt
## European Patent Office
## Office européen des brevets

(19)

(11) Numéro de publication: **0 135 427**
**B1**

(12) # FASCICULE DE BREVET EUROPEEN

(45) Date de publication du fascicule du brevet:
**09.12.87**

(51) Int. Cl.⁴: **F 16 B 19/14,** B 25 C 1/18

(21) Numéro de dépôt: **84401653.5**

(22) Date de dépôt: **08.08.84**

(54) **Bague de centrage et de guidage pour élément de fixation.**

(30) Priorité: **11.08.83 FR 8313223**

(43) Date de publication de la demande:
**27.03.85 Bulletin 85/13**

(45) Mention de la délivrance du brevet:
**09.12.87 Bulletin 87/50**

(84) Etats contractants désignés:
**BE DE GB IT LU NL SE**

(56) Documents cités:
**FR - A - 1 078 680**
**FR - A - 1 541 533**
**US - A - 3 516 323**
**US - A - 4 286 496**

(73) Titulaire: **ILLINOIS TOOL WORKS INC., 8501 West Higgins Road, Chicago Illinois 60631 (US)**

(72) Inventeur: **Ollivier, Jean, 31, rue Georges Bonnet, F-26000 Valence (Drôme) (FR)**

(74) Mandataire: **Bloch, Robert et al, 6, rue du Faubourg Saint-Honoré, F-75008 Paris (FR)**

## Description

La présente invention concerne une bague de centrage et de guidage agencée pour être montée sur un élément de fixation, par l'avant de celui-ci, destiné à être entraîné dans le canon d'un appareil de scellement avant d'être introduit dans un matériau destiné à le recevoir.

L'un des objectifs d'une telle bague est de centrer et de guider convenablement l'élément de fixation dans le canon de l'appareil pour éviter qu'il ne soit introduit dans le matériau dans une position inclinée, ou même, qu'il ne rebondisse sur ce matériau.

On connaît déjà une telle bague, ayant une forme générale tubulaire, ouverte à ses deux extrémités axiales, et pourvue à son extrémité arrière d'une collerette radiale en saillie agencée pour coopérer avec la paroi du canon, et centrer et guider l'élément de fixation. Toutefois, et du fait de l'ouverture de l'extrémité avant de la bague, l'opérateur devant monter l'élément de fixation dans l'appareil peut être blessé par la pointe avant de l'élément de fixation, d'autant plus que le montage de l'élément doit généralement s'effectuer à force (FR-A-1 078 680).

On connaît également une bague du type mentionné au début, dans laquelle seule l'extrémité arrière, pourvue d'une collerette radiale en saillie, est ouverte (US-A-3 516 323). Cependant, si le montage dans l'appareil avec cette bague, de l'élément de fixation ne peut causer aucun désagrément à l'opérateur, grâce à la fermeture de l'extrémité avant, cette bague n'en présente pas moins un autre inconvénient. En effet, du fait de cette fermeture, l'air enfermé au départ dans la bague peut être comprimé lors du montage; ce qui pourrait avoir pour conséquence d'entraîner la bague à se dégager de l'élément de fixation au cours de l'entraînement de celui-ci dans le canon de l'appareil, ou même avant. Dans ce cas, la bague ne pourrait bien entendu plus jouer son rôle.

La présente invention vise donc à proposer une bague de centrage et de guidage pour élément de fixation, qui ne puisse causer aucun désagrément à l'opérateur et qui ne risque pas de se dégager de l'élément de fixation, avant qu'il ne soit correctement introduit dans le matériau destiné à le recevoir.

A cet effet, la présente invention concerne une bague de centrage et de guidage agencée pour être montée sur un élément de fixation, par l'avant de celui-ci, élément destiné à être entraîné dans le canon d'un appareil de scellement avant d'être introduit dans un matériau destiné à le recevoir, la bague ayant une forme générale tubulaire, ouverte à ses deux extrémités axiales, et comprenant, à l'une de ses deux extrémités axiales une collerette radiale en saillie agencée pour coopérer avec la paroi du canon de l'appareil, bague caractérisée par le fait qu'il est prévu des moyens de protection dans l'ouverture de l'autre de ses deux extrémités axiales.

Ainsi, non seulement aucune quantité d'air ne peut être enfermée dans la bague, puisqu'elle est ouverte à ses deux extrémités, mais un opérateur ne risque pas de se blesser avec la portion avant de l'élément de fixation, puisqu'elle est protégée par les moyens de protection de la bague.

Dans une forme de réalisation préférée de la bague de l'invention, les dits moyens comprennent une languette qui peut être escamotable.

Ainsi, cette languette peut être rabattue contre la paroi intérieure de la bague, en cas de montage par son extrémité pourvue de la languette sur un élément de fixation court. Elle peut aussi être rabattue vers l'extérieur, pour s'étendre sensiblement dans le prolongement de la paroi adjacente de la bague, en cas de montage sur un élément de fixation long.

De façon plus générale, tous moyens de protection disposés dans l'ouverture opposée à celle de la collerette resoudraient le problème à l'origine duquel se trouve la présente invention. On pourrait vouloir ainsi percer au moins un orifice dans l'extrémité avant fermée de la bague du deuxième type de l'art antérieur présentée plus haut, ou mettre une grille à la place de la languette.

L'invention sera mieux comprise à l'aide de la description suivante de la forme de réalisation préférée de la bague de l'invention, en référence aux dessins annexés, sur lesquels:

– la figure 1 représente une vue en perspective de la bague de l'invention;

– la figure 2 représente une vue en coupe axiale de la bague de la figure 1, montée avec sa languette non rabattue;

– la figure 3 représente une vue en coupe axiale de la bague de la figure 1, montée avec sa languette rabattue vers l'extérieur, et

– la figure 4 représente une vue en coupe axiale de la bague de la figure 1, montée avec sa languette rabattue vers l'intérieur.

La bague représentée sur les dessins est destinée à centrer puis à guider un élément de fixation et peut même servir à le positionner dans une position de départ appropriée. Par élément de fixation, il faut comprendre tout élément destiné à être introduit dans un matériau quelconque, bois, béton, ciment, matériau métallique, etc. au moyen d'un appareil de scellement, bien connu de l'homme de métier. Il peut s'agir d'un appareil à tir direct ou d'un appareil à tir indirect, comprenant donc une masselotte.

Comme éléments de fixation, on citera, à titre d'exemple, les chevilles, les pointes, les clous.

De préférence, et comme illustré sur les dessins, l'élément de fixation 1 en question, au demeurant parfaitement connu, comporte une tête arrière 2, sur laquelle s'exerce l'action d'entraînement, mais qui joue également un rôle de centrage et de guidage pour que le guidage de l'élément soit assuré dans deux plans axiaux, l'un au niveau de cette tête, l'autre au niveau de la bague. La tête arrière 2 de l'élément comporte à cet effet une partie cylindrique, solidaire du corps de l'élément 1, de diamètre très légèrement inférieur à celui du canon de l'appareil dans lequel l'élément est destiné à être entraîné et à coulisser.

La bague de l'invention est une pièce de forme générale tubulaire 10, d'axe 11, ouverte à ses deux extrémités axiales. Elle comporte un corps 12, tubulaire, pourvu, à l'une de ses deux extrémités, d'une collerette cylindrique radiale 13, en saillie vers l'extérieur. Le diamètre extérieur de cette collerette est sensiblement le même que celui de la tête 2 de l'élément 1 sur lequel la bague est destinée à être montée, soit très légèrement inférieur au diamètre du canon de l'appareil. Aussi, des nervures de retenue 14 s'étendent axialement à la périphérie de la collerette 13, ces nervures extérieures s'inscrivant dans un cylindre de diamètre légèrement supérieur à celui du canon.

L'introduction de la bague 10 dans le canon s'effectue donc à force.

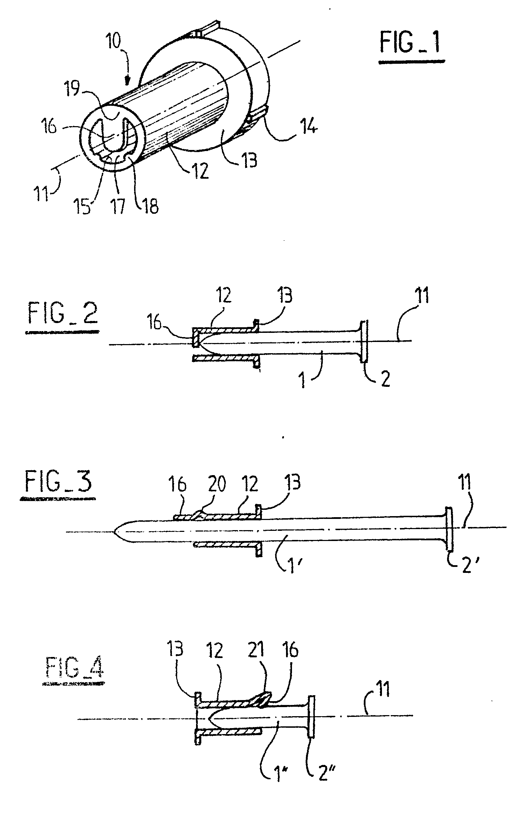

A l'autre extrémité axiale 15 de la bague 10, dans le plan axial de l'ouverture, s'étend depuis une partie de la paroi du tube 12 et au-delà de l'axe 11 dans une forme semi-circulaire, une languette de protection 16, de largeur sensiblement égale à la moitié du diamètre de l'ouverture, dans l'exemple représenté. Cette languette, dont la forme n'est pas limitative de l'invention, est agencée pour pouvoir être escamotée et être rabattue, soit contre la paroi intérieure 17 du tube 12 (figure 4), soit vers l'extérieur, pour s'étendre dans le prolongement de la paroi du tube 12 (figure 3).

Le diamètre intérieur du tube 12 de la bague est très légèrement supérieur à celui du corps 1 de l'élément de fixation. Aussi, des nervures de retenue 18 s'étendent axialement le long de la paroi intérieure 17 du tube 12 de la bague, pour assurer le maintien de la bague sur l'élément de fixation, ces nervures intérieures 18 enveloppant un cylindre de diamètre légèrement inférieur à celui du corps 1 de l'élément de fixation. Le montage de la bague 10 sur l'élément de fixation 1 s'effectue donc à force.

Bien que le matériau de la bague de l'invention ne soit pas particulièrement déterminant, il est quand même préférable que celle-ci soit en matière synthétique, et même en matière plastique injectée d'une seule pièce. A cet égard, on remarquera que grâce à ses caractéristiques structurelles, la bague est facile à fabriquer à partir de moules à injection centrale. Alors la languette 16 est une languette souple flexible, pouvant être rabattue dans un sens ou dans l'autre autour de sa zone 19 de raccordement à la portion adjacente de la paroi du tube 12.

Quant à la longueur de la bague, elle n'a pas à être adaptée à un type particulier d'élément de fixation, comme on le verra plus loin: elle peut être standard, l'écartement des deux moyens de centrage et de guidage, que constituent la tête de l'élément de fixation et la collerette de la bague, pouvant toujours pratiquement avoir une dimension relativement correcte.

En ce qui concerne le diamètre de la bague, il doit être adapté aux éléments de fixation à guider, si le matériau de la bague n'est pas élastique. Par contre, si il l'est, la bague pourra s'adapter à différents diamètres d'élément de fixation.

Ayant décrit jusqu'ici la bague de l'invention, abordons maintenant son montage sur l'élément de fixation.

La figure 2 illustre le montage normal en bout pour élément de fixation 1 de longueur moyenne.

La bague 12 a été emmanchée sur la portion avant de l'élément 1, par son ouverture située dans le plan de la collerette 13, et ce jusqu'à ce que la languette 16, dans sa position non escamotée, vienne en butée contre la pointe avant de l'élément. On soulignera que l'opérateur, durant l'introduction de l'élément dans l'appareil ne pourra pas un seul instant se blesser en poussant du doigt l'ensemble dans l'appareil. Une fois la bague emmanchée, sa collerette 13 est à une distance appropriée de la tête 2 de l'élément, pour assurer un bon guidage.

La figure 3 illustre la possibilité d'un montage exceptionnel en retrait pour élément de fixation 1' de grande longueur. La bague 12 a été emmanchée d'abord sur la portion avant de l'élément 1, par son ouverture située dans le plan de la collerette 13', jusqu'à ce que la languette 16 vienne en butée contre la pointe avant de l'élément 1'; puis on a continué d'emmancher la bague plus avant, par la collerette 13, ce qui a fait pivoter la languette 16 vers l'extérieur, jusqu'à ce qu'elle vienne dans le prolongement de la paroi du tube 12, en appui contre la paroi de l'élément 1'. L'emmanchement s'est poursuivi jusqu'à ce que la distance entre la collerette 13 et la tête 2' de l'élément soit correcte pour le guidage. On notera que la zone de raccordement entre la languette 16 et la paroi du tube 12 forme, dans la position emmanchée, un léger bourrelet 20 qui n'empêche pas le coulissement de la bague dans le canon.

La figure 4 illustre une autre possibilité de montage exceptionnel à l'envers pour élément de fixation 1'' de petite longueur. Si on avait emmanché la bague par son ouverture située dans le plan de la collerette 13, cette collerette se serait trouvée à une distance trop courte de la tête 2'' de l'élément pour assurer un bon guidage. C'est pourquoi, et exceptionnellement, la bague a été montée par son ouverture dans laquelle s'étend normalement la languette 16. Toutefois, et la languette 16 étant, dès le départ, en contact avec la pointe avant de l'élément, lors du montage, la languette est repoussée vers la paroi intérieure du tube 12, d'abord par la pointe de l'élément, puis par sa partie conique adjacente, avant d'être plaquée contre la paroi du tube 12 par le corps de l'élément. Dans la position emmanchée de la bague, la languette 16 et la portion adjacente de la paroi du tube 12 forment un bourrelet 21, en retrait par rapport à la périphérie de la collerette 16 et de la tête 2'' de l'élément. Dans l'utilisation particulière de la bague qui est faite ici la collerette 13 et la tête 2'' de l'élément sont encore à une distance convenable l'une de l'autre.

## Revendications

1. Bague de centrage et de guidage agencée pour être montée sur un élément de fixation (1; 1'; 1''), par l'avant de celui-ci, élément destiné à être entraîné dans le canon d'un appareil de scellement avant d'être introduit dans un matériau destiné à le recevoir, la bague (12) ayant une forme générale tubulaire, ouverte à ses deux extrémités axiales, et comprenant, à l'une de ses deux extrémités axiales, une collerette radiale (13) en saillie agencée pour coopérer avec la paroi du canon de l'appareil, bague caractérisé par le fait qu'il est prévu des moyens de protection (16) dans l'ouverture de l'autre de ses deux extrémités axiales.

2. Bague selon la revendication 1, dans laquelle les dits moyens de protection comprennent und languette (16) s'étendant dans ladite ouverture (15).

3. Bague selon la revendication 2, dans laquelle la languette (16) est escamotable.

4. Bague selon la revendication 3, dans laquelle la languette (16) peut être rabattue vers l'extérieur et s'étendre dans le prolongement de la paroi de la bague.

5. Bague selon l'une des revendications 1 à 4, dans laquelle sont prévues des nervures de maintien extérieures.

6. Bague selon l'une des revendications 1 à 5, dans laquelle sont prévues des nervures de maintien intérieures.

## Patentansprüche

1. Zentrier- und Führungshülse, die angeordnet ist um auf ein Befestigungselement (1; 1'; 1'') von vorne aufmontiert zu sein, das in dem Lauf eines Setzgerätes eingeschoben wird, bevor es in ein Material eingetrieben wird, das zu seiner Aufnahme dient, wobei die Hülse (12) eine im wesentlichen rohrartige Form hat und an ihren beiden axialen Enden offen ist und an einem ihrer beiden axialen Enden einen überstehenden radialen Flansch aufweist, die dazu dient, mit der Laufwandung des Gerätes zusammenzuwirken, dadurch gekennzeichnet, dass sie in der Öffnung des anderen ihrer beiden axialen Enden ein Schutzelement (16) aufweist.

2. Hülse nach Anspruch 1, bei der das Schutzelement eine sich in der Öffnung (15) erstreckende Zunge (16) aufweist.

3. Hülse nach Anspruch 2, bei der die Zunge (16) versenkbar ist.

4. Hülse nach Anspruch 3, bei der die Zunge (16) nach aussen umschlagbar ist, derart, dass sie sich in der Verlängerung der Hülsenwand erstreckt.

5. Hülse nach einem der Ansprüche 1 bis 4, bei der äussere Halterungsrippen vorgesehen sind.

6. Hülse nach einem der Ansprüche 1 bis 5, bei der innere Halterungsrippen vorgesehen sind.

## Claims

1. Centering and guiding ring arranged for being mounted onto a fastening element (1; 1'; 1''), from the front part thereof, element which is intended to be driven within the barrel of a fastening apparatus before being introduced into a material intended for receiving it, the ring (12) having a tubular general shape, open at its two axial ends, and comprising, at one of its two axial ends, a projecting radial flange (13) arranged for engaging the wall of the barrel of the apparatus, ring characterized in that protection means (16) are provided in the opening of the other of its two axial ends.

2. Ring of claim 1, wherein said protection means comprise a tongue (16) extending within said opening (15).

3. Ring of claim 2, wherein said tongue (16) is retractable.

4. Ring of claim 3, wherein the tongue (16) can be outwardly turned over and extend in prolongation of the wall of the ring.

5. Ring of one of claims 1 to 4, wherein external holding ribs are provided.

6. Ring of one of claims 1 to 5, wherein internal holding ribs are provided.

− 1/1

FIG_1

FIG_2

FIG_3

FIG_4